Europäisches Patentamt

European Patent Office

Office européen des brevets

(19)

(11) Publication number: **0 430 131 A1**

# EUROPEAN PATENT APPLICATION

(12)

(21) Application number: 90122528.4

(22) Date of filing: 26.11.90

(51) Int. Cl.⁵: **C09K 5/04**

(30) Priority: 29.11.89 JP 309666/89
29.11.89 JP 309653/89
29.11.89 JP 309674/89

(43) Date of publication of application:
**05.06.91 Bulletin 91/23**

(84) Designated Contracting States:
**DE FR GB Bulletin 00/1**

(71) Applicant: **MATSUSHITA ELECTRIC
INDUSTRIAL CO., LTD.
1006, Oaza Kadoma
Kadoma-shi, Osaka-fu, 571(JP)**

(72) Inventor: **Yoshida, Yuji
1-5-18, Minami-machi
Itami-shi, Hyogo-ken(JP)**
Inventor: **Arita, Koji
2-1-6, Awaji, Higashiyodogawa-ku
Osaka-shi, Osaka-fu(JP)**
Inventor: **Tomizawa, Takeshi
1-12-12, Mayumi Minami
Ikoma-shi, Nara-ken(JP)**

(74) Representative: **Eisenführ, Speiser & Strasse
Martinistrasse 24
W-2800 Bremen 1(DE)**

(54) **Working fluid.**

(57) A working fluid comprising chlorodifluoromethane, at least one fluorocarbon having a boiling point of -60° C to -40° C under atmospheric pressure selected from the group consisting of methane derivatives and ethane derivatives which consist one or two carbon atom, hydrogen atoms and fluorine atoms and at least one halogenated ethane which consists of two carbon atoms, 1, 2 or 3 hydrogen atoms, 0, 1 or 2 chlorine atoms and balance of fluorine atoms and has a boiling point of not lower than -30° C under atmospheric pressure, which has very small influence on the ozone layer in the stratosphere and is suitable as a substitute working fluid for dichlorodifluoromethane.

Fig. 1

## WORKING FLUID

BACKGROUND OF THE INVENTION
Field of the Invention

The present invention relates to a working fluid which comprises plural halogenated hydrocarbons and is used in refrigerators, heat pumps and the like.

Description of the Related Art

Hitherto, as working fluids in refrigerators, heat pumps and the like, are used halogenated hydrocarbons derived from methane or ethane, which are also called as fluorinated halocarbons. They work at such utilization temperature that a condensation temperature and/or an evaporation temperature are from about 0 (zero) to about $50°$ C. Among them, dichlorodifluoromethane ( $CCl_2F_2$, R12) with a boiling point of $-29.8°$ C is widely used as a working fluid in a refrigerator, an air conditioner for an automobile and a large size refrigeration system.

Recently, depletion of the ozone layer in the stratosphere with the fluorinated halocarbon is seriously discussed as one of global environmental problems, and amounts to be used and produced of some fully halogenated chlorofluorocarbons (CFCs) which have high ozone depletion potential are limited by the Montreal Protocol. In future, their use and production will be banned.

R12 has an ozone depletion potential (hereinafter referred to as "ODP") of 1.0 when ODP of trichlorofluoromethane ( $CCl_3F$ , R11) is defined to be 1 (one). The reduction of the use and production amount of R12 will have serious influence on human life since the refrigerators and the air conditioners are widely used. Therefore, it is highly desired to quickly develop a working fluid which has a small ODP and can be used as a substitute for R12.

To this end, U.S. Patent No. 4,810,403 proposes a refrigerant comprising a first halocarbon having a boiling point at atmospheric pressure in the range of about $-50°$ C to about $-30°$ C, a second halocarbon having a boiling point at atmospheric pressure in the range of about $-30°$ C to about $-5°$ C and a third halocarbon having a boiling point at atmospheric pressure in the range of about $-l5°$ C to about $30°$ C and discloses specifically a refrigerant consisting of R22, R152a and R114 and the like.

SUMMARY OF THE INVENTION

An object of the present invention is to provide a working fluid which has less influence on the ozone layer in the stratosphere and can be used as a substitute for R12.

According to the present invention, there is provided a working fluid comprising chlorodifluoromethane ( $CHClF_2$, R22) which has a boiling point of $-40.8°$ C, at least one fluorocarbon having a boiling point of $-60°$ C to $-40°$ C under atmospheric pressure selected from the group consis ting of methane derivatives and ethane derivatives which consist one or two carbon atom, hydrogen atoms and fluorine atoms (hereinafter referred to as "fluorinated methane or ethane derivative") and at least one halogenated ethane which consists of two carbon atoms, 1, 2 or 3 hydrogen atoms, 0, 1 or 2 chlorine atoms and balance of fluorine atoms (hereinafter referred to as "halogenated ethane derivative") and has a boiling point of not lower than $-30°$ C under atmospheric pressure.

BRIEF DESCRIPTION OF THE DRAWINGS

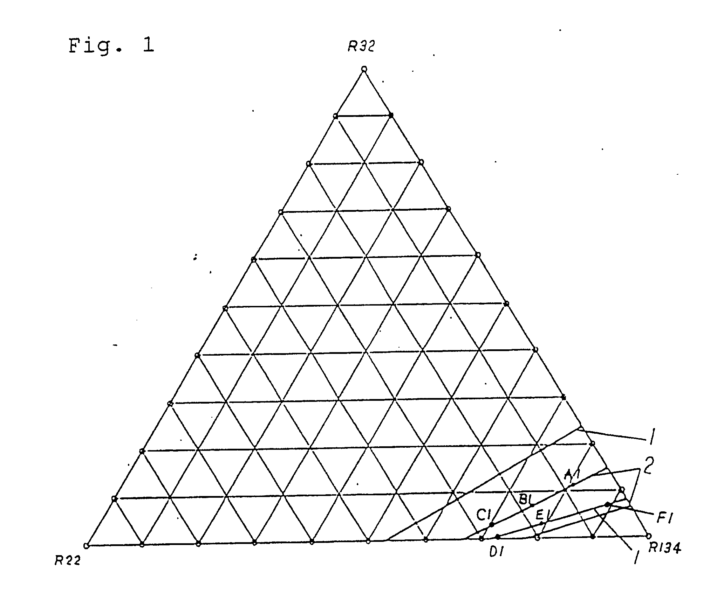

Figs. 1 to 21 are ternary composition diagrams of the working fluids in Examples 1 to 21, respectively.

DETAILED DESCRIPTION OF THE INVENTION

Among the components of the working fluid of the present invention, R22 has a very low ozone depletion potential, namely its ODP is only 0.05, and it contains both the hydrogen atom and the chlorine atom in its molecular structure. R22 is widely used as a working fluid together with R12.

Since the fluorinated methane or ethane derivative contains no chlorine atom, it has little ozone depletion potential.

The halogenated ethane derivatives include fluorinated halocarbons having no chlorine atom in molecular structures and fluorinated halocarbons having chlorine and hydrogen atoms. It has substantially no or very low ozone depletion potential.

In particular, since the fluorinated methane or ethane derivative having the boiling point of $-60\,^{\circ}$C to $-40\,^{\circ}$C under atmospheric pressure, R22 and the halogenated ethane derivative having a boiling point of not lower than $-30\,^{\circ}$C under atmospheric pressure are used in combination, the working fluid of the present invention has a similar boiling point to that of R12.

The reason why the fluorinated methane or ethane derivative having the boiling point of $-60\,^{\circ}$C to $-40\,^{\circ}$C is selected is that such fluorinated methane or ethane derivative has a critical temperature of at least about $50\,^{\circ}$C so that, at a condensation temperature of about $50\,^{\circ}$C, the working fluid with any composition can be condensed.

Among the fluorinated methane or ethane derivative, difluoromethane ( $CH_2F_2$, ODP = 0), pentafluoroethane ( $C_2HF_5$, ODP = 0) or trifluoroethane ( $C_2H_3F_3$, ODP = 0) is preferred.

Among the halogenated ethane derivatives, tetrafluoroethane ( $C_2H_2F_4$, ODP = 0), chlorotetrafluoroethane ( $C_2HClF_4$, ODP = 0.02), chlorodifluoroethane ( $C_2H_3ClF_2$, ODP = 0.06), dichlorotrifluoroethane ( $C_2HCl_2F_3$, ODP = 0.02) or dichlorofluoroethane ( $C_2H_3Cl_2F$ , ODP = 0.1) is preferred.

A weight ratio of the fluorinated methane or ethane derivative, R22 and the halogenated ethane derivative depends on the properties of the working fluid to be prepared and/or the kinds of the fluorinated methane or ethane derivative and the halogenated ethane derivative. Usually, the working fluid of the present invention comprises 1 to 95 % by weight of the fluorinated methane or ethane derivative, 1 to 95 % by weight of R22 and 5 to 95 % by weight of the halogenated ethane derivative.

The working fluid of the present invention has much smaller influences on the ozone layer in the stratosphere than R12, since it comprises R22 which has a very low ozone depletion potential (ODP = 0.05) and contains both the chlorine and hydrogen atoms in the molecular structure, at least one fluorinated methane or ethane derivative which has a boiling point of $-60\,^{\circ}$C to $-40\,^{\circ}$C under atmospheric pressure and substantially no ozone depletion potential (ODP = 0) and contains no chlorine atom in its molecular structure and at least one halogenated ethane derivative which has a boiling point of not lower than $-30\,^{\circ}$C under atmospheric pressure and substantially no ozone depletion potential (ODP = 0) and contains no chlorine atom in the molecular structure, or has a very low ozone depletion potential and contains both the chlorine and hydrogen atoms.

In a specific composition range, the working fluid of the present invention has substantially the same vapor pressure as R12 in a temperature range between about $0\,^{\circ}$C to about $50\,^{\circ}$C, and is suitable as a working fluid which can be used in presently used apparatuses as a substitute for R12.

The working fluid of the present invention is expected to have very small ODP.

In addition, since the working fluid of the present invention is a non-azeotropic mixture and has a temperature gradient in the condensing and evaporating processes a higher coefficient of performance (COP) than R12 is expected when a Lorenz cycle in which a temperature difference from a heat source is decreased is assembled.

## PREFERRED EMBODIMENTS OF THE INVENTION

The present invention will be illustrated by following Examples.

In Examples 1-7, among working fluids containing R22 and difluoromethane as a second component having a lower boiling point than R22, a working fluid containing tetrafluoroethane as a third component having a higher boiling point than R12 is explained in detail. When other third component is used, a working fluid is explained with reference to a phase equilibrium diagram in the drawing.

## Example 1

Fig. 1 shows a ternary composition diagram indicating equilibrium states of a mixture consisting of difluoromethane (R32), R22 and 1,1,2,2-tetrafluoroethane (R134) at specific temperatures under specific pressure in a triangular coordinate.

In the triangular coordinate, in the counterclockwise direction from the top vertex, single compounds are assigned on the vertexes from a compound having the lowest boiling point to one having the highest boiling point. A composition (weight ratio) of the three compound at one point on the triangular coordinate is expressed by a ratio of distances between said point and the opposite sides. The distance between said point and the opposite side corresponds to a proportion of the compound which is assigned to the vertex which faces said side.

In Fig. 1, the lines 1 are phase equilibrium lines of the mixture at $0\,^{\circ}$C under pressure of 2.116 kg/cm$^2$G. These temperature and pressure correspond to a saturated state of R12. The upper one of the phase equilibrium lines 1 (corresponding to R12 at 0°C) is a saturated vapor line, and the lower one is a saturated liquid line. In the area between these two lines, the mixture is in the phase equilibrium state. The lines 2 are phase equilibrium lines of the mixture at 50°C under pressure of 11.373 kg/cm²G. These temperature and pressure correspond to a saturated state of R12.

As understood from Fig. 1, the mixture comprising about 0 to about 25 % by weight of R32, about 0 to about 45 % by weight of R22 and about 55 to about 95 % by weight of R134 is preferred, since it has substantially the same vapor pressure as R12 in the temperature range between about 0°C and about 50°C. Further, the mixture comprising about 0 to about 15 % by weight of R32, about 0 to about 30 % by weight of R22 and about 70 to about 90 % by weight of R134 is more preferred, since it has substantially the same vapor pressure as R12 at all the utilizing temperatures between 0°C and 50°C.

The compositions and ODPs of the working fluids at the points A1 to F1 in Fig. 1 are shown in Table 1.

Table 1

| Point | A1 | B1 | C1 | D1 | E1 | F1 |
|---|---|---|---|---|---|---|
| R32 (wt. %) | 11.6 | 6.7 | 3.3 | 0.2 | 3.5 | 7.6 |
| R22 (wt. %) | 7.7 | 18.6 | 26.1 | 28.5 | 17.3 | 3.1 |
| R134 (wt. %) | 80.7 | 74.7 | 70.6 | 71.2 | 79.2 | 89.3 |
| ODP | 0.004 | 0.009 | 0.013 | 0.014 | 0.009 | 0.002 |

The points A1, B1 and C1 are on the saturated vapor line of the phase equilibrium lines 2 (corresponding to R12 at 50°C) and in the area between the saturated vapor line and the saturated liquid line of the phase equilibrium lines 1 (corresponding to R12 at 0°C). Therefore, the mixture is in the phase equilibrium state at 0°C under pressure of 2.116 kg/cm²G which correspond to the saturated state of R12.

Since the points D1, E1 and F1 are on the saturated liquid line of the phase equilibrium lines 1 (corresponding to R12 at 0°C) and in the area between the saturated vapor line and the saturated liquid line of the phase equilibrium lines 2 (corresponding to R12 at 50°C), the mixture is in the phase equilibrium state at 50°C under pressure of 11.373 kg/cm²G which correspond to the equilibrium state of R12.

Then, the working fluid having the composition in Table 1 is in the saturated state or the phase equilibrium state under the saturated vapor pressure condition of R12 at 0°C and 50°C, so that, in the utilization temperature range between about 0°C and about 50°C, the working fluid has substantially the same condensation and evaporation temperatures as R12 when operated under the saturated vapor pressure of R12 at said temperatures.

In the above, the mixtures having the compositions on the phase equilibrium lines 1 (corresponding to R12 at 0°C) or 2 (corresponding to R12 at 50°C) have been explained. In addition, when working fluids having compositions in the area inside the points A1 to F1, namely those having compositions which realize the phase equilibrium states at 0°C under pressure of 2.116 kg/cm²G and at 50°C under pressure of 11.373 kg/cm²G both corresponding to the saturated state of R12 are operated in the similar way to the above, condensation and evaporation temperatures which are substantially the same as those of R12 can be achieved in the utilization temperature range between about 0°C and about 50°C.

Accordingly, from Fig. 1, it is understood that the working fluid comprising about 0 to about 25 % by weight (for example 1 to 25 % by weight) of R32, about 0 to about 45 % by weight (for example 1 to 45 % by weight) of R22 and about 55 to about 95 % by weight of tetrafluoroethane is preferred since it has substantially the same vapor pressure as R12 in the utilization temperature range between about 0°C to about 50°C. Further, the working fluid comprising about 0 to about 15 % by weight (for example 1 to 15 % by weight) of R32, about 0 to about 30 % by weight (for example 1 to 30 % by weight) of R22 and about 70 to about 90 % by weight of tetrafluoroethane is more preferred since it has substantially the same vapor pressure as R12 in the whole utilization temperature range between 0°C to 50°C. The working fluids in this Example are expected to have the ODP of 0 to 0.02 and very promising as substitute working fluids to R12.

Example 2

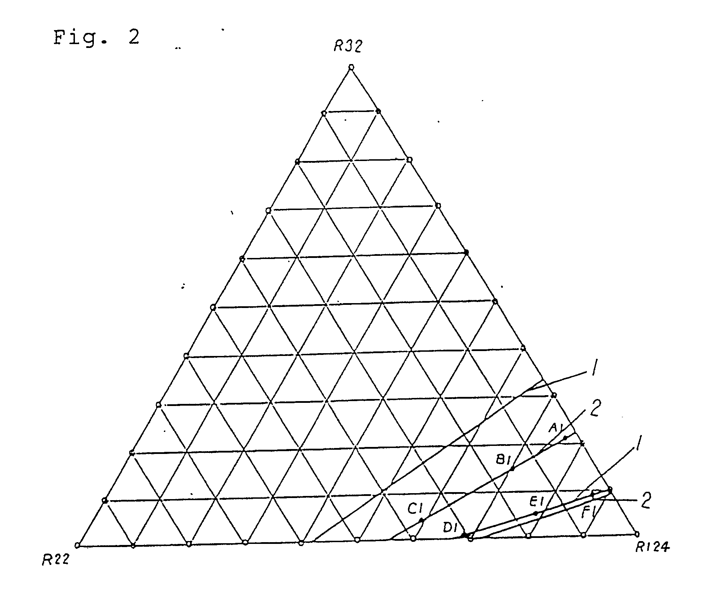

Fig. 2 shows a ternary composition diagram indicating equilibrium states of a mixture consisting of R32, R22 and 2-chloro-1,1,1,2-tetrafluoroethane (R124) at specific temperatures under specific pressure in a triangular coordinate.

The compositions and ODPs of the working fluids at the points A1 to F1 in Fig. 2 are shown in Table 2.

### Table 2

| Point | A1 | B1 | C1 | D1 | E1 | F1 |
|---|---|---|---|---|---|---|
| R32 (wt. %) | 21.1 | 15.2 | 4.9 | 1.0 | 5.8 | 8.9 |
| R22 (wt. %) | 2.8 | 14.6 | 35.1 | 30.2 | 14.4 | 4.1 |
| R124 (wt. %) | 76.1 | 70.2 | 60.0 | 68.8 | 79.8 | 87.0 |
| ODP | 0.017 | 0.021 | 0.030 | 0.029 | 0.023 | 0.019 |

In this case, the mixture comprising about 0 to about 35 % by weight (for example 1 to 35 % by weight) of R32, about 0 to about 60 % by weight (for example 1 to 60 % by weight) of R22 and about 40 to about 90 % by weight of R124 is preferred. Further, the mixture comprising about 0 to about 25 % by weight (for example 1 to 25 % by weight) of R32, about 0 to about 50 % by weight (for example 1 to 50 % by weight) of R22 and about 50 to about 90 % by weight of R124 is more preferred.

### Example 3

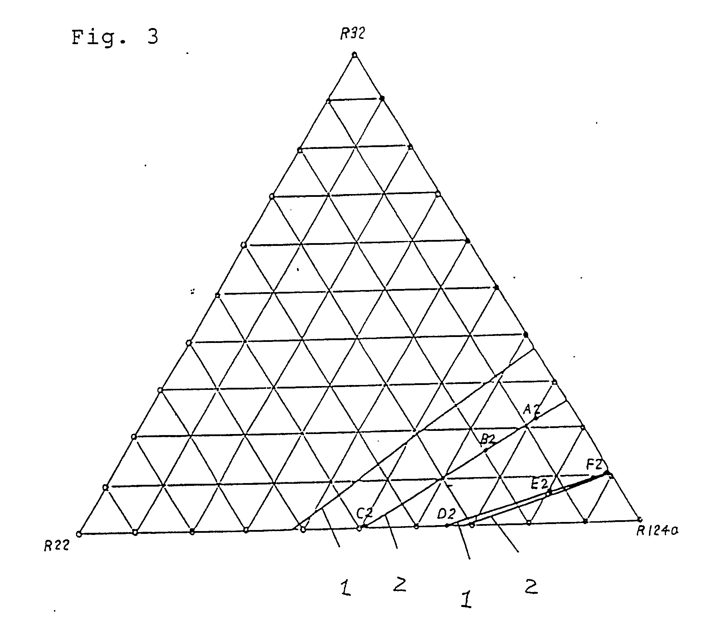

Fig. 3 shows a ternary composition diagram indicating equilibrium states of a mixture consisting of R32, R22 and 1-chloro-1,1,2,2-tetrafluoroethane (R124a) at specific temperatures under specific pressure in a triangular coordinate.

The compositions and ODPs of the working fluids at the points A2 to F2 in Fig. 3 are shown in Table 3.

### Table 3

| Point | A2 | B2 | C2 | D2 | E2 | F2 |
|---|---|---|---|---|---|---|
| R23 (wt. %) | 21.8 | 15.7 | 0.3 | 0.4 | 7.3 | 10.8 |
| R22 (wt. %) | 8.1 | 19.8 | 49.0 | 34.3 | 12.0 | 0.6 |
| R124a (wt. %) | 70.1 | 64.5 | 50.7 | 65.3 | 80.7 | 88.6 |
| ODP | 0.018 | 0.023 | 0.035 | 0.030 | 0.022 | 0.018 |

In this case, the mixture comprising about 0 to about 35 % by weight (for example 1 to 35 % by weight) of R32, about 0 to about 60 % by weight (for example 1 to 60 % by weight) of R22 and about 40 to about 90 % by weight of R124a is preferred, and further, the mixture comprising about 0 to about 25 % by weight (for example 1 to 25 % by weight) of R32, about 0 to about 50 % by weight (for example 1 to 50 % by weight) of R22 and about 50 to about 90 % by weight of R124a is more preferred.

As understood from Figs. 2 and 3, the mixture comprising about 0 to about 35 % by weight (for example 1 to 35 % by weight) of R32, about 0 to about 60 % by weight (for example 1 to 60% by weight) of R22 and about 40 to about 90 % by weight of chlorotetrafluoroethane is preferred. Further, the mixture comprising about 0 to about 25 % by weight (for example 1 to 25 % by weight) of R32, about 0 to about 50 % by weight (for example 1 to 50 % by weight) of R22 and about 50 to about 90 % by weight of chlorotetrafluoroethane is more preferred.

Since the working fluids in Examples 2 and 3 are expected to have the ODP of from 0.02 to 0.04, they are very promising as substitute working fluids for R12.

Example 4

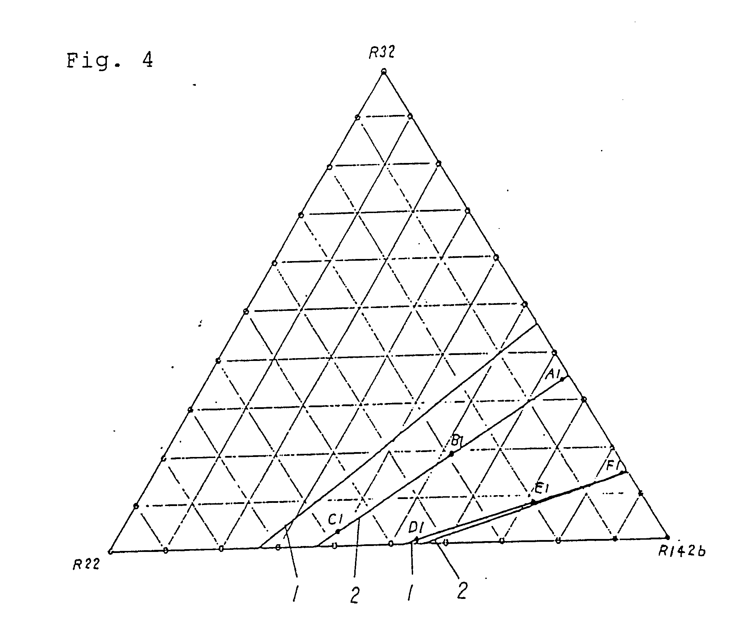

Fig. 4 shows a ternary composition diagram indicating equilibrium states of a mixture consisting of R32, R22 and 1-chloro-1,1-difluoroethane (R142b) at specific temperatures under specific pressure in a triangular coordinate.

The compositions and ODPs of the working fluids at the points A1 to F1 in Fig. 4 are shown in Table 4.

Table 4

| Point | A1 | B1 | C1 | D1 | E1 | F1 |
|---|---|---|---|---|---|---|
| R23 (wt. %) | 34.2 | 19.3 | 2.9 | 0.4 | 8.8 | 14.2 |
| R22 (wt. %) | 1.7 | 28.8 | 57.9 | 46.4 | 20.1 | 2.1 |
| R142b (wt. %) | 64.1 | 51.9 | 39.2 | 53.2 | 71.1 | 83.7 |
| ODP | 0.039 | 0.046 | 0.052 | 0.055 | 0.053 | 0.051 |

From Fig. 4, the mixture comprising about 0 to about 45 % by weight (for example 1 to 45 % by weight) of R32, about 0 to about 75 % by weight (for example 1 to 75 % by weight) of R22 and about 25 to about 85 % by weight of R142b is preferred, and further, the mixture comprising about 0 to about 35 % by weight (for example 1 to 35 % by weight) of R32, about 0 to about 65 % by weight (for example 1 to 65 % by weight) of R22 and about 35 to about 85 % by weight of R142b is more preferred.

Since the working fluids in this Example are expected to have the ODP pf from 0.04 to 0.06, they are very promising as substitute working fluids for R12.

Example 5

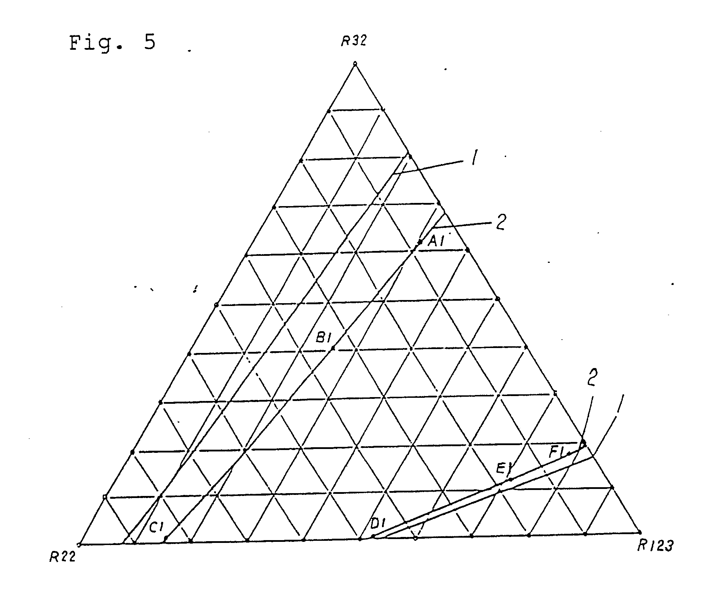

Fig. 5 shows a ternary composition diagram indicating equilibrium states of a mixture consisting of R32, R22 and 2,2-dichloro-1,1,1-trifluoroethane (R123) at specific temperatures under specific pressure in a triangular coordinate.

The compositions and ODPs of the working fluids at the points A1 to F1 in Fig. 5 are shown in Table 5.

Table 5

| Point | A1 | B1 | C1 | D1 | E1 | F1 |
|---|---|---|---|---|---|---|
| R32 (wt. %) | 61.3 | 40.2 | 0.5 | 0.2 | 12.9 | 17.8 |
| R22 (wt. %) | 8.2 | 34.7 | 84.5 | 48.4 | 16.0 | 3.4 |
| R123 (wt. %) | 30.5 | 25.1 | 15.0 | 51.4 | 71.1 | 78.8 |
| ODP | 0.010 | 0.022 | 0.045 | 0.034 | 0.022 | 0.017 |

In this case, the mixture comprising about 0 to about 80 % by weight (for example 1 to 80 % by weight) of R32, about 0 to about 90 % by weight (for example 1 to 90 % by weight) of R22 and about 10 to about 85 % by weight of R123 is preferred, and further, the mixture comprising about 0 to about 70 % by weight (for example 1 to 70 % by weight) of R32, about 0 to about 85 % by weight (for example 1 to 85 % by weight) of R22 and about 15 to about 80 % by weight of R123 is more preferred.

Example 6

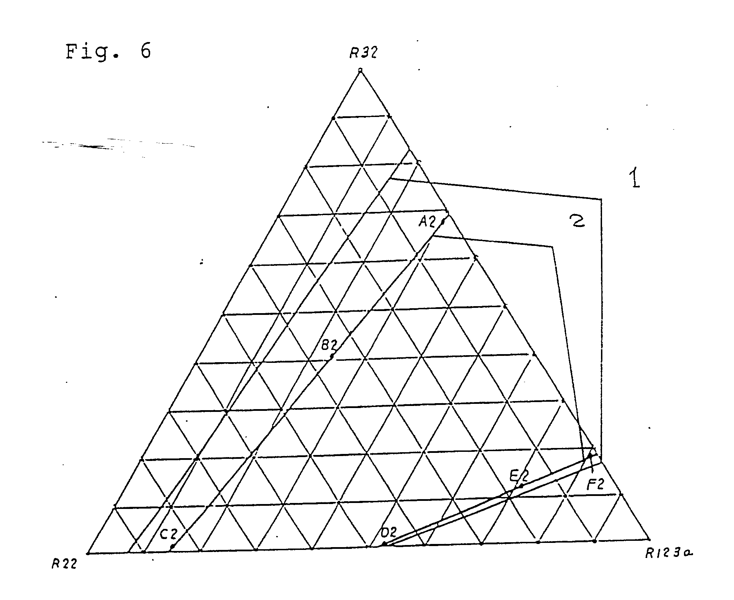

Fig. 6 shows a ternary composition diagram indicating equilibrium states of a mixture consisting of R32, R22 and 1,2-dichlorotrifluoroethane (R123a) at specific temperatures under specific pressure in a triangular coordinate.

The compositions and ODPs of the working fluids at the points A2 to F2 in Fig. 6 are shown in Table 6.

Table 6

| Point | A2 | B2 | C2 | D2 | E2 | F2 |
|---|---|---|---|---|---|---|
| R32 (wt. %) | 68.7 | 40.8 | 0.7 | 0.3 | 12.6 | 18.5 |
| R22 (wt. %) | 0.5 | 34.9 | 84.7 | 47.5 | 15.5 | 0.2 |
| R123a (wt. %) | 30.8 | 24.3 | 14.6 | 52.2 | 71.9 | 81.3 |
| ODP | 0.064 | 0.022 | 0.045 | 0.034 | 0.022 | 0.016 |

In this case, the mixture comprising about 0 to about 85 % by weight (for example 1 to 85 % by weight) of R32, about 0 to about 90 % by weight (for example 1 to 90 % by weight) of R22 and about 10 to about 85 % by weight of R123a is preferred, and further, the mixture comprising about 0 to about 70 by weight (for example 1 to 70 % by weight) of R32, about 0 to about 85 % by weight (for example 1 to 85 % by weight) of R22 and about 15 to about 80 % by weight of R123a is more preferred.

As understood from Figs. 5 and 6, the mixture comprising about 0 to about 85 % by weight (for example 1 to 85 % by weight) of R32, about 0 to about 90 % by weight (for example 1 to 90 % by weight) of R22 and about 10 to about 85 % by weight of dichlorotrifluoroethane is preferred. Further, the mixture comprising about 0 to about 70 % by weight (for example 1 to 70 % by weight) of R32, about 0 to about 85 % by weight (for example 1 to 85 % by weight) of R22 and about 15 to about 80 % by weight of dichlorotrifluoroethane is more preferred.

Since the working fluids in Examples 5 and 6 are expected to have the ODP of from 0.01 to 0.05, they are very promising as substitute working fluids for R12.

Example 7

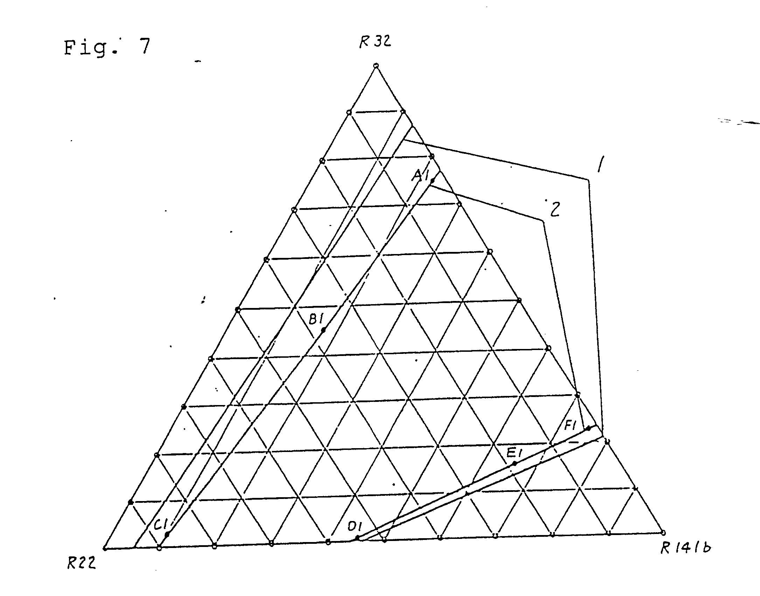

Fig. 7 shows a ternary composition diagram indicating equilibrium states of a mixture consisting of R32, R22 and 1,1-dichloro-1-fluoroethane (R141b) at specific temperatures under specific pressure in a triangular coordinate.

The compositions and ODPs of the working fluids at the points A1 to F1 in Fig. 7 are shown in Table 7.

Table 3

| Point | A1 | B1 | C1 | D1 | E1 | F1 |
|-------|------|------|------|------|------|------|
| R32 (wt. %) | 74.3 | 45.1 | 1.3 | 0.6 | 15.7 | 23.0 |
| R22 (wt. %) | 3.2 | 37.2 | 88.4 | 59.4 | 18.7 | 1.4 |
| R141b (wt. %) | 22.5 | 17.7 | 10.3 | 45.0 | 65.6 | 75.6 |
| ODP | | 0.024 | 0.036 | 0.055 | 0.072 | 0.075 | 0.076 |

As understood from Fig. 7, the mixture comprising about 0 to about 85 % by weight (for example 1 to 85 % by weight) of R32, about 0 to about 95 % by weight (for example 1 to 95 % by weight) of R22 and about 5 to about 80 % by weight of R141b is preferred, and further, the mixture comprising about 0 to about 75 % by weight (for example 1 to 75 % by weight) of R32, about 0 to about 90 % by weight (for example 1 to 90 % by weight) of R22 and about 10 to about 75 % by weight of R141b is more preferred.

Since the working fluids in this Example are expected to have the ODP of from 0.02 to 0.07, they are very promising as substitute working fluids for R12.

From the above results in Examples 1-7, it is understood that the mixture comprising 85 % by weight or less of R32, 95 % by weight or less of R22, and 55 to 95 % by weight of tetrafluoroethane or 40 to 90 % by weight of chlorotetrafluoroethane or 25 to 85 by weight of chlorodifluoroethane or 10 to 85 % by weight of dichlorotrifluoroethane or 5 to 80 % by weight of dichlorofluoroethane is preferred. Further, the mixture comprising 75 % by weight or less of R23, 75 % by weight or less of R22, and 70 to 90 % by weight of tetrafluoroethane or 50 to 90 % by weight of chlorotetrafluoroethane or 35 to 85 % by weight of chlorodifluoroethane or 15 to 85 % by weight of dichlorotrifluoroethane or 10 to 75 % by weight of dichlorofluoroethane is more preferred.

Next, in Examples 8-14, among working fluids contains R22 and pentafluoroethane as a second component having a lower boiling point than R22, a working fluid containing chlorotetrafluoroethane as a third component having a higher boiling point than R12 is explained in detail. When other third component is used, a working fluid is explained with reference to a phase equilibrium diagram in the drawing.

Example 8

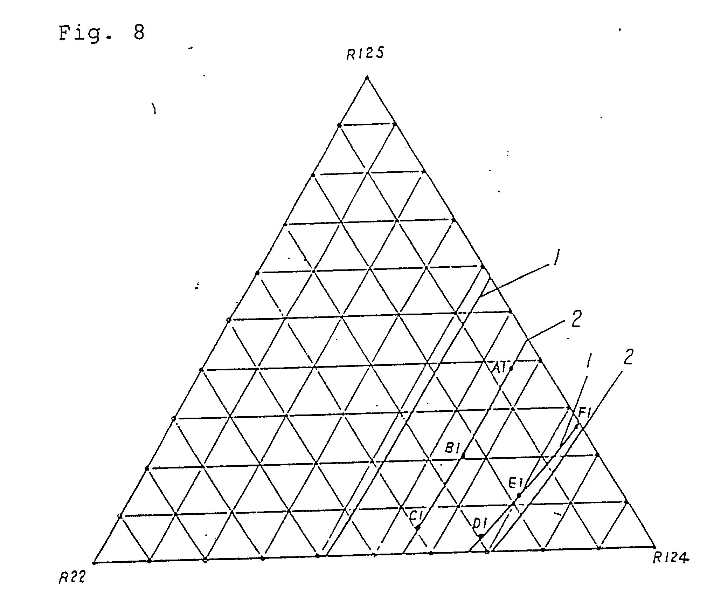

Fig. 8 shows a ternary composition diagram indicating equilibrium states of a mixture consisting of pentafluoroethane (R125), R22 and 2-chloro-1,1,1,2-tetrafluoroethane (R124) at specific temperatures under specific pressure in a triangular coordinate.

In Fig. 8, the lines 1 are phase equilibrium lines of the mixture at 0°C under pressure of 2.116 kg/cm²G. These temperature and pressure correspond to a saturated state of R12. The upper one of the phase equilibrium lines 1 (corresponding to R12 at 0°C) is a saturated vapor line, and the lower one is a saturated liquid line. In the area between these two lines, the mixture is in the phase equilibrium state. The lines 2 are phase equilibrium lines of the mixture at 50°C under pressure of 11.373 kg/cm²G. These temperature and pressure correspond to a saturated state of R12.

As understood from Fig. 8, the mixture comprising about 0 to about 60 % by weight (for example 1 to 60 % by weight) of R125, about 0 to about 60 % by weight (for example 1 to 60 % by weight) of R22 and about 40 to about 75 % by weight of R124 is preferred, since it has substantially the same vapor pressure as R12 in the temperature range between about 0°C and about 50°C. Further, the mixture comprising about 0 to about 45 % by weight (for example 1 to 45 % by weight) of R125, about 0 to about 45 % by weight (for example 1 to 45 % by weight) of R22 and about 55 to about 75 % by weight of R124 is more preferred, since it has substantially the same vapor pressure as R12 at all the utilizing temperatures between 0°C and 50°C.

The compositions and ODPs of the working fluids at the points A1 to F1 in Fig. 8 are shown in Table 8.

8

Table 8

| Point | A1 | B1 | C1 | D1 | E1 | F1 |
|---|---|---|---|---|---|---|
| R125 (wt. %) | 38.3 | 20.5 | 5.7 | 2.8 | 11.8 | 26.5 |
| R22 (wt. %) | 6.0 | 24.0 | 39.1 | 29.8 | 18.1 | 0.2 |
| R124 (wt. %) | 55.7 | 55.5 | 55.2 | 67.4 | 70.1 | 73.3 |
| ODP | 0.014 | 0.023 | 0.031 | 0.028 | 0.023 | 0.015 |

The points A1, B1 and C1 are on the saturated vapor line of the phase equilibrium lines 2 (corresponding to RI2 at 50°C) and in the area between the saturated vapor line and the saturated liquid line of the phase equilibrium lines 1 (corresponding to R12 at 0°C). Therefore, the mixture is in the phase equilibrium state at 0°C under pressure of 2.116 kg/cm$^2$G which correspond to the saturated state of R12.

Since the points D1, E1 and F1 are on the saturated liquid line of the phase equilibrium lines 1 (corresponding to R12 at 0°C) and in the area between the saturated vapor line and the saturated liquid line of the phase equilibrium lines 2 (corresponding to R12 at 50°C), the mixture is in the phase equilibrium state at 50°C under pressure of 11.373 kg/cm$^2$G which correspond to the equilibrium state of R12.

Then, the working fluid having the composition in Table 8 is in the saturated state or the phase equilibrium state under the saturated vapor pressure condition of R12 at 0°C and 50°C, so that, in the utilization temperature range between about 0°C and about 50°C, the working fluid has substantially the same condensation and evaporation temperatures as R12 when operated under the saturated vapor pressure of R12 at said temperatures.

In the above, the mixtures having the compositions on the phase equilibrium lines 1 (corresponding to R12 at 0°C) or 2 (corresponding to R12 at 50°C) have been explained. In addition, when working fluids having compositions in the area inside the points A1 to F1, namely those having compositions which realize the phase equilibrium states at 0°C under pressure of 2.116 kg/cm$^2$G and at 50°C under pressure of 11.373 kg/cm$^2$G both corresponding to the saturated state of R12 are operated in the similar way to the above, condensation and evaporation temperatures which are substan tially the same as those of R12 can be achieved in the utilization temperature range between about 0°C and about 50°C.

Example 9

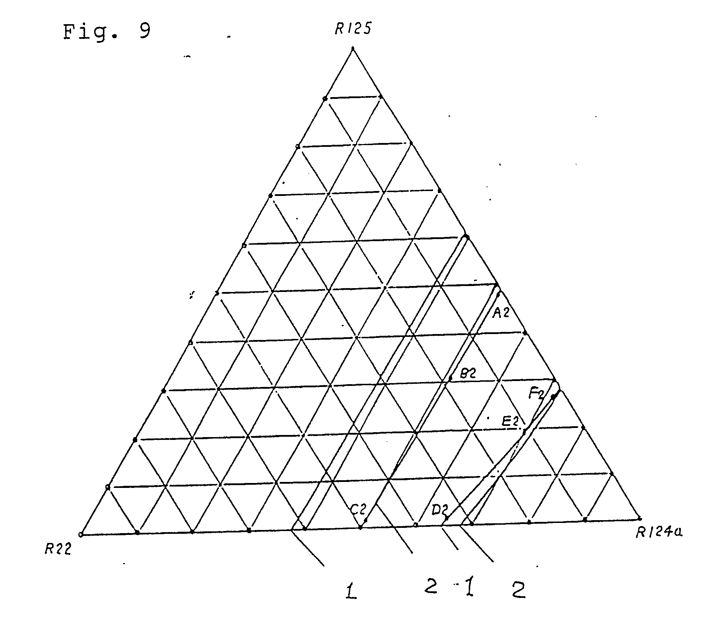

Fig. 9 shows a ternary composition diagram indicating equilibrium states of a mixture consisting of R125, R22 and 1-chloro-1,1,2,2-tetrafluoroethane (R124a) at specific temperatures under specific pressure in a triangular coordinate.

In Fig. 9, lines 1 are phase equilibrium lines of the mixture at 0°C under pressure of 2.116 kg/cm$^2$G, and lines 2 are phase equilibrium lines of the mixture at 50°C under pressure of 11.373 kg/cm$^2$G.

In this case, the mixture comprising about 0 to about 60 % by weight (for example 1 to 60 % by weight) of R125, about 0 to about 60 % by weight (for example 1 to 60 % by weight) of R22 and about 40 to about 70 % by weight of R124a is preferred, since it has substantially the same vapor pressure as R12, and further, the mixture comprising about 0 to about 50 % by weight (for example 1 to 50 % by weight) of R125, about 0 to about 50 % by weight (for example 1 to 50 % by weight) of R22 and about 50 to about 70 % by weight of R124a is more preferred since it has substantially the same vapor pressure as R12 in the whole utilization temperature range between 0°C and 50°C.

The compositions and ODPs of the working fluids at the points A2 to F2 in Fig. 9 are shown in Table 9.

Table 9

| Point | A2 | B2 | C2 | D2 | E2 | F2 |
|---|---|---|---|---|---|---|
| R32 (wt. %) | 48.3 | 30.3 | 0.8 | 1.0 | 19.2 | 26.6 |
| R22 (wt. %) | 0.5 | 18.7 | 48.8 | 34.2 | 10.8 | 1.9 |
| R124a (wt. %) | 51.2 | 51.0 | 50.4 | 64.8 | 70.0 | 71.5 |
| ODP | | 0.010 | 0.020 | 0.034 | 0.030 | 0.019 | 0.015 |

Then, the working fluid having the composition in Table 9 is in the saturated state or the phase equilibrium state under the saturated vapor pressure condition of R12 at 0°C and 50°C, so that, in the utilization temperature range between about 0°C and about 50°C, the working fluid has substantially the same condensation and evaporation temperatures as R12 when operated under the saturated vapor pressure of R12 at said temperatures.

As understood from Figs. 8 and 9, the mixture comprising about 0 to about 60 % by weight (for example 1 to 60 % by weight) of R125, about 0 to about 60 % by weight (for example 1 to 60 % by weight) of R22 and about 40 to about 75 % by weight of chlorotetrafluoroethane is preferred, since it has substantially the same vapor pressure as R12 in the utilization temperature range between about 0°C to about 50°C. Further, the mixture comprising about 0 to about 50 % by weight (for example 1 to 50 % by weight) of R125, about 0 to about 50 % by weight (for example 1 to 50 % by weight) of R22 and about 50 to about 75 % by weight of chlorotetrafluoroethane is more preferred, since it has substantially the same vapor pressure as R12 in the whole utilization temperature range between 0°C to 50°C. The working fluids in Example 8 and 9 are expected to have the ODP of 0.01 to 0.04 and very promising as substitute working fluids for R12.

Example 10

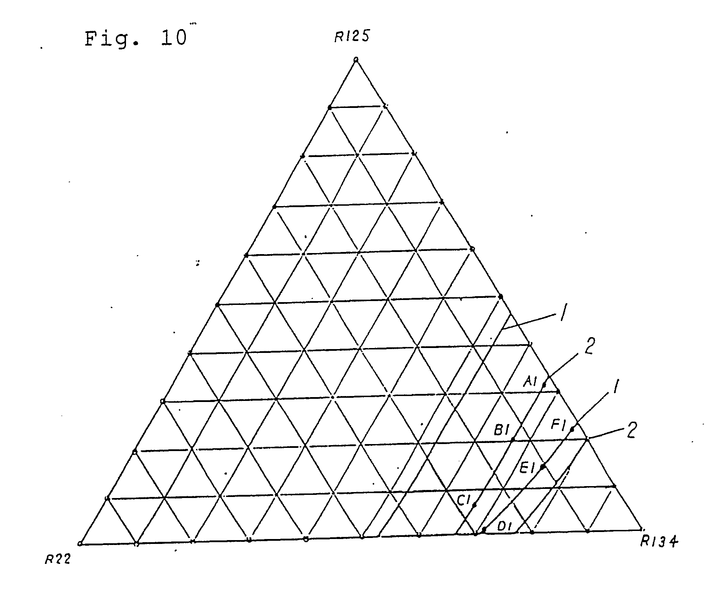

Fig. 10 shows a ternary composition diagram indicating equilibrium states of a mixture consisting of R125, R22 and 1,1,2,2-tetrafluoroethane (R134) at specific temperatures under specific pressure in a triangular coordinate.

The compositions and ODPs of the working fluids at the points A1 to F1 in Fig. 10 are shown in Table 10.

Table 10

| Point | A1 | B1 | C1 | D1 | E1 | F1 |
|---|---|---|---|---|---|---|
| R125 (wt. %) | 31.2 | 20.1 | 6.8 | 0.6 | 14.4 | 22.8 |
| R22 (wt. %) | 1.8 | 13.0 | 26.4 | 28.5 | 10.7 | 0.5 |
| R134 (wt. %) | 67.0 | 66.9 | 66.8 | 70.9 | 74.9 | 76.7 |
| ODP | | 0.001 | 0.006 | 0.013 | 0.014 | 0.005 | 0.001 |

As understood from Fig. 10, the mixture comprising about 0 to about 45 % by weight (for example 1 to 45 % by weight) of R125, about 0 to about 45 % by weight (for example 1 to 45 % by weight) of R22 and about 55 to about 80 % by weight of R134 is preferred, and further, the mixture comprising about 0 to about 35 % by weight (for example 1 to 35 % by weight) of R125, about 0 to about 35 % by weight (for example 1 to 35 % by weight) of R22 and about 65 to about 75 % by weight of R134 is more preferred.

Since the working fluids in this Example are expected to have the ODP of from about 0 to 0.04, they are very promising as substitute working fluids for R12.

Example 11

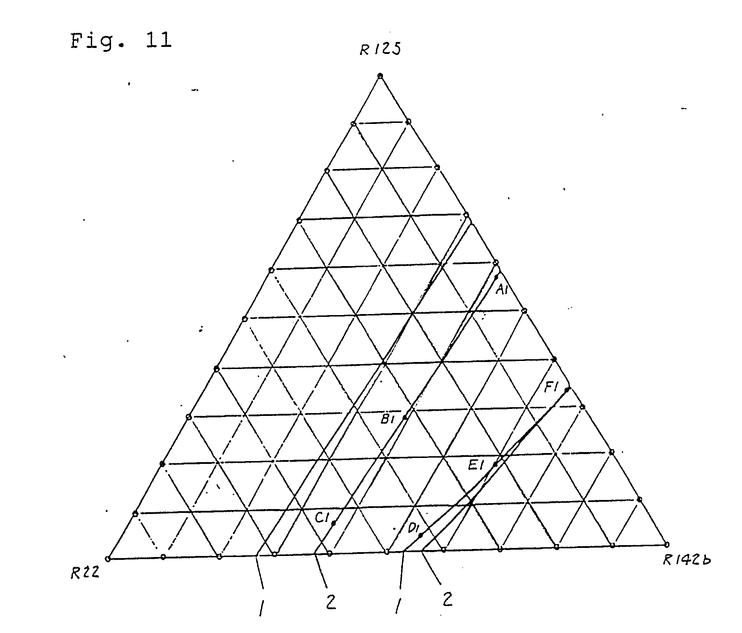

Fig. 11 shows a ternary composition diagram indicating equilibrium states of a mixture consisting of R125, R22 and 1-chloro-1,1-difluoroethane (R142b) at specific temperatures under specific pressure in a triangular coordinate.

The compositions and ODPs of the working fluids at the points A1 to F1 in Fig. 11 are shown in Table 11.

Table 11

| Point | A1 | B1 | C1 | D1 | E1 | F1 |
|---|---|---|---|---|---|---|
| R125 (wt. %) | 57.5 | 28.9 | 6.8 | 2.9 | 18.5 | 33.9 |
| R22 (wt. %) | 1.0 | 31.9 | 55.7 | 43.3 | 21.2 | 0.8 |
| R142b (wt. %) | 41.5 | 39.2 | 37.5 | 53.8 | 60.3 | 65.3 |
| ODP | 0.025 | 0.039 | 0.050 | 0.054 | 0.047 | 0.040 |

As understood from Fig. 11, the mixture comprising about 0 to about 70 % by weight (for example 1 to 70 % by weight) of R125, about 0 to about 75 % by weight (for example 1 to 75 % by weight) of R22 and about 25 to about 65 % by weight of R142b is preferred, and further, the mixture comprising about 0 to about 60 % by weight (for example 1 to 60 % by weight) of R125, about 0 to about 65 % by weight (for example 1 to 65 % by weight) of R22 and about 35 to about 65 % by weight of R142b is more preferred.

Since the working fluids in this Example are expected to have the ODP of from 0.02 to 0.06, they are very promising as substitute working fluids for R12.

Example 12

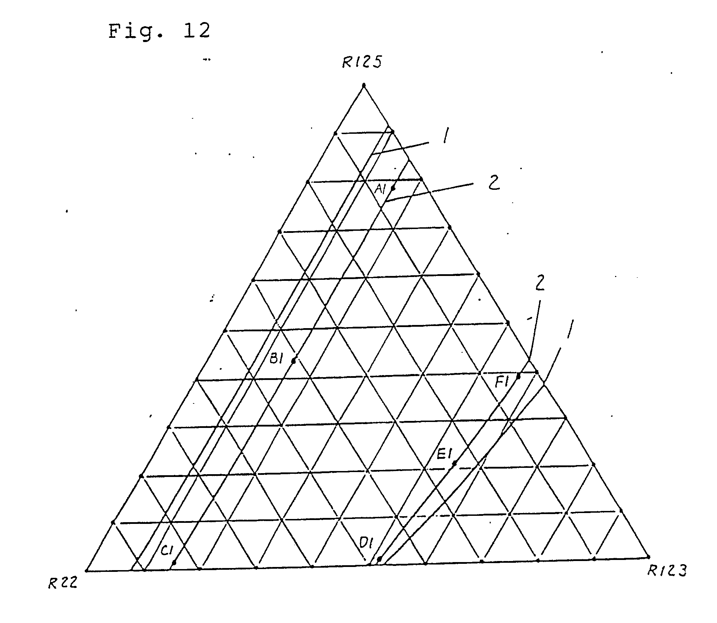

Fig. 12 shows a ternary composition diagram indicating equilibrium states of a mixture consisting of R125, R22 and 2,2-dichloro-1,1,1-trifluoroethane (R123) at specific temperatures under specific pressure in a triangular coordinate.

The compositions and ODPs of the working fluids at the points A1 to F1 in Fig. 12 are shown in Table 12.

Table 12

| Point | A1 | B1 | C1 | D1 | E1 | F1 |
|---|---|---|---|---|---|---|
| R125 (wt. %) | 78.8 | 43.9 | 1.2 | 0.5 | 20.6 | 39.5 |
| R22 (wt. %) | 5.1 | 40.5 | 83.9 | 48.3 | 24.5 | 3.2 |
| R123 (wt. %) | 16.1 | 15.6 | 14.9 | 51.2 | 54.9 | 57.3 |
| ODP | 0.006 | 0.023 | 0.045 | 0.034 | 0.023 | 0.013 |

As understood from Fig. 12, the mixture comprising about 0 to about 90 % by weight (for example 1 to 90 % by weight) of R125, about 0 to about 90 % by weight (for example 1 to 90 % by weight) of R22 and about 10 to about 60 % by weight of R123 is preferred, and further, the mixture comprising about 0 to about 85 % by weight (for example 1 to 85 % by weight) of R125, about 0 to about 85 % by weight (for example 1 to 85 % by weight) of R22 and about 15 to about 60 % by weight of R123 is more preferred.

Example 13

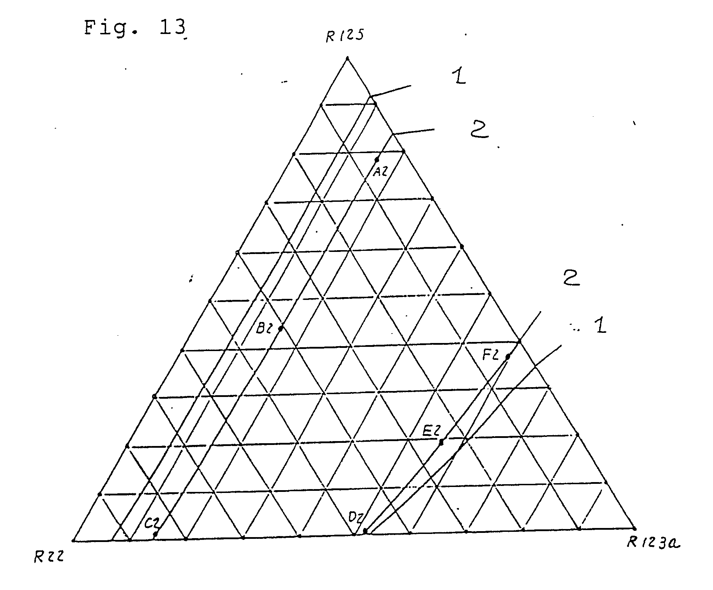

Fig. 13 shows a ternary composition diagram indicating equilibrium states of a mixture consisting of R125, R22 and 1,2-dichlorodifluoroethane (R123a) at specific temperatures under specific pressure in a triangular coordinate.

The compositions and ODPs of the working fluids at the points A2 to F2 in Fig. 13 are shown in Table 13.

Table 13

| Point | A2 | B2 | C2 | D2 | E2 | F2 |
|---|---|---|---|---|---|---|
| R125 (wt. %) | 78.8 | 44.2 | 1.6 | 0.6 | 19.4 | 37.1 |
| R22 (wt. %) | 5.1 | 40.4 | 83.9 | 47.4 | 24.0 | 3.2 |
| R123a (wt. %) | 16.1 | 15.4 | 14.5 | 52.0 | 56.6 | 59.7 |
| ODP | 0.006 | 0.023 | 0.045 | 0.034 | 0.023 | 0.014 |

In this case, the mixture comprising about 0 to about 90 % by weight (for example 1 to 90 % by weight) of R125, about 0 to about 90 % by weight (for example 1 to 90 % by weight) of R22 and about 10 to about 65 % by weight of R123a is preferred, and further, the mixture comprising about 0 to about 85 % by weight (for example 1 to 85 % by weight) of R32, about 0 to about 85 % by weight (for example 1 to 85 % by weight) of R22 and about 15 to about 60 % by weight of R123a is more preferred.

As understood from Figs. 12 and 13, the mixture comprising about 0 to about 90 % by weight (for example 1 to 90 % by weight) of R125, about 0 to about 90 % by weight (for example 1 to 90 % by weight) of R22 and about 10 to about 65 % by weight of dichlorotrifluoroethane is preferred. Further, the mixture comprising about 0 to about 85 % by weight (for example 1 to 85 % by weight) of R125, about 0 to about 85 % by weight (for example 1 to 85 % by weight) of R22 and about 15 to about 60 % by weight of dichlorotrifluoroethane is more preferred.

Since the working fluids in Examples 12 and 13 are expected to have the ODP of from 0.01 to 0.05, they are very promising as substitute working fluids for R12.

Example 14

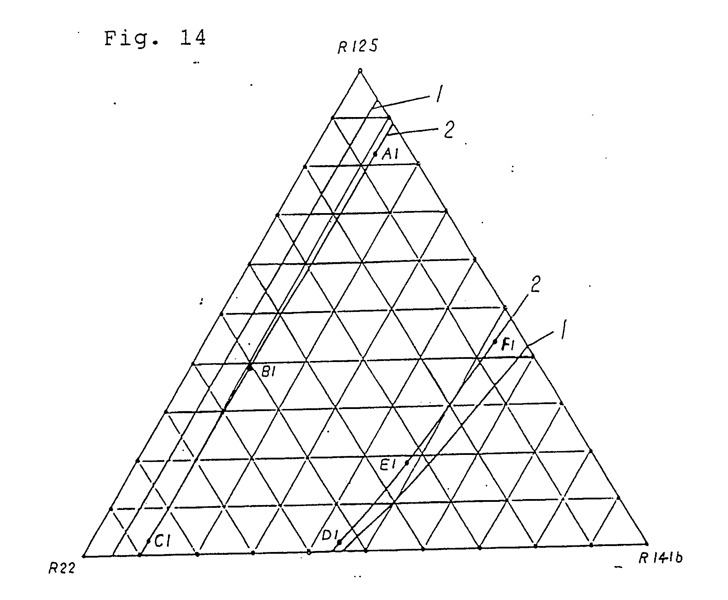

Fig. 14 shows a ternary composition diagram indicating equilibrium states of a mixture consisting of R125, R22 and 1,1-dichloro-1-fluoroethane (R141b) at specific temperatures under specific pressure in a triangular coordinate.

The compositions and ODPs of the working fluids at the points A1 to F1 in Fig. 14 are shown in Table 14.

Table 14

| Point | A1 | B1 | C1 | D1 | E1 | F1 |
|---|---|---|---|---|---|---|
| R125 (wt. %) | 82.2 | 39.1 | 3.0 | 1.3 | 18.9 | 43.5 |
| R22 (wt. %) | 6.5 | 50.2 | 86.9 | 54.1 | 32.9 | 4.5 |
| R141b (wt. %) | 11.3 | 10.7 | 10.1 | 49.6 | 48.2 | 52.0 |
| ODP | 0.015 | 0.036 | 0.054 | 0.072 | 0.065 | 0.054 |

As understood from Fig. 14, the mixture comprising about 0 to about 95 % by weight (for example 1 to 95 % by weight) of R125, about 0 to about 95 % by weight (for example 1 to 95 % by weight) of R22 and about 5 to about 60 % by weight of R141b is preferred, and further, the mixture comprising about 0 to about 90 % by weight (for example 1 to 90 % by weight) of R125, about 0 to about 90 % by weight (for example 1 to 90 % by weight) of R22 and about 10 to about 50 % by weight of R141b is more preferred.

Since the working fluids in this Example are expected to have the ODP of from 0.01 to 0.08, they are very promising as substitute working fluids for R12.

From the above results in Examples 8-14, it is understood that the mixture comprising 95 % by weight or less of R125, 95 % by weight or less of R22, and 55 to 80 % by weight of tetrafluoroethane or 40 to 75 % by weight of chlorotetrafluoroethane or 25 to 65 % by weight of chlorodifluoroethane or 10 to 65 % by weight of dichlorotrifluoroethane or 5 to 60 % by weight of dichlorofluoroethane is preferred. Further, the mixture comprising 90 % by weight or less of Rl25, 90 % by height or less of R22, and 65 to 75 % by weight of tetrafluoroethane or 50 to 70 % by weight of chlorotetrafluoroethane or 35 to 65 % by weight of chlorodifluoroethane or 15 to 60 % by iveight of dichlorotrifluoroethane or 10 to 50 % by weight of dichlorofluoroethane is more preferred.

In Examples 15-21, among working fluids contains R22 and trifluoroethane as a second component having a lower boiling point than R22, a working fluid containing dichlorotrifluoroethane as a third component having a higher boiling point than R12 is explained in detail. When other third component is used, a working fluid is explained with reference to a phase equilibrium diagram in the drawing.

Example 15

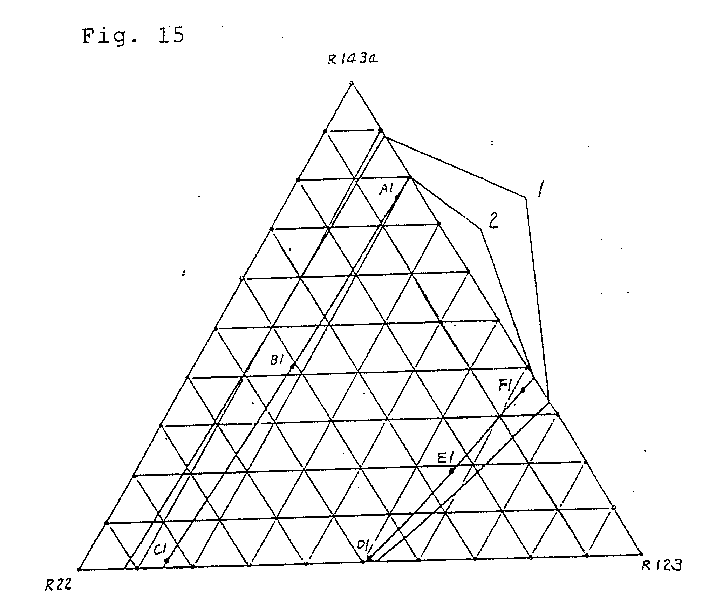

Fig. 15 shows a ternary composition diagram indicating equilibrium states of a mixture consisting of 1,1,1-trifluoroethane (R143a), R22 and 2,2-dichloro-1,1,1-tri-fluoroethane (R123) at specific temperatures under specific pressure in a triangular coordinate.

In Fig. 15, the lines 1 are phase equilibrium lines of the mixture at $0°$ C under pressure of 2.116 kg/cm$^2$G. These temperature and pressure correspond to a saturated state of R12. The upper one of the phase equilibrium lines 1 (corresponding to R12 at $0°$ C) is a saturated vapor line, and the lower one is a saturated liquid line. In the area between these two lines, the mixture is in the phase equilibrium state. The lines 2 are phase equilibrium lines of the mixture at $50°$ C under pressure of 11.373 kg/cm$^2$G. These temperature and pressure correspond to a saturated state of R12.

As understood from Fig. 15, the mixture comprising about 0 to about 90 % by weight (for example 1 to 90 % by weight) of R143a, about 0 to about 90 % by weight (for example 1 to 90 % by weight) of R22 and about 10 to about 70 % by weight of R123 is preferred, since it has substantially the same vapor pressure as R12 in the temperature range between about $0°$ C and about $50°$ C. Further, the mixture comprising about 0 to about 80 % by weight (for example 1 to 80 % by weight) of R143a, about 0 to about 85 % by weight of R22 and about 15 to about 65 % by weight of R123 is more preferred, since it has substantially the same vapor pressure as R12 at all the utilizing temperatures between $0°$ C and $50°$ C.

The compositions and ODPs of the working fluids at the points A1 to F1 in Fig. 15 are shown in Table 15.

## Table 15

| Point | A1 | B1 | C1 | D1 | E1 | F1 |
|---|---|---|---|---|---|---|
| R143a (wt. %) | 76.6 | 41.9 | 0.9 | 0.4 | 19.6 | 36.0 |
| R22 (wt. %) | 3.4 | 40.3 | 84.2 | 48.4 | 22.7 | 1.9 |
| R123 (wt. %) | 20.0 | 17.8 | 14.9 | 51.2 | 57.7 | 62.1 |
| ODP | | 0.006 | 0.024 | 0.045 | 0.034 | 0.023 | 0.013 |

The points A1, B1 and C1 are on the saturated vapor line of the phase equilibrium lines 2 (corresponding to R12 at 50°C) and the points D1, E1 and F1 are on the saturated liquid line of the phase equilibrium lines 1 (corresponding to R12 at 0°C) and in the area between the saturated vapor line and the saturated liquid line of the phase equilibrium lines 2 (corresponding to R12 at 50°C), the mixture is in the phase equilibrium state at 0°C under pressure of 2.116 kg/cm²G which correspond to the equilibrium state of R12.

Then, the working fluid having the composition in Table 15 is in the saturated state or the phase equilibrium state under the saturated vapor pressure condition of R12 at 0°C and 50°C, so that, in the utilization temperature range between about 0°C and about 50°C, the working fluid has substantially the same condensation and evaporation temperatures as R12 when operated under the saturated vapor pressure of R12 at said temperatures.

In the above, the mixtures having the compositions on the phase equilibrium lines 1 (corresponding to R12 at 0°C) or 2 (corresponding to R12 at 50°C) have been explained. In addition, when working fluids having compositions in the area inside the points A1 to F1, namely those having compositions which realize the phase equilibrium states at 0°C under pressure of 2.116 kg/cm²G and at 50°C under pressure of 11.373 kg/cm²G both corresponding to the saturated state of R12 are operated in the similar way to the above, condensation and evaporation temperatures which are substantially the same as those of R12 can be achieved in the utilization temperature range between about 0°C and about 50°C.

Example 16

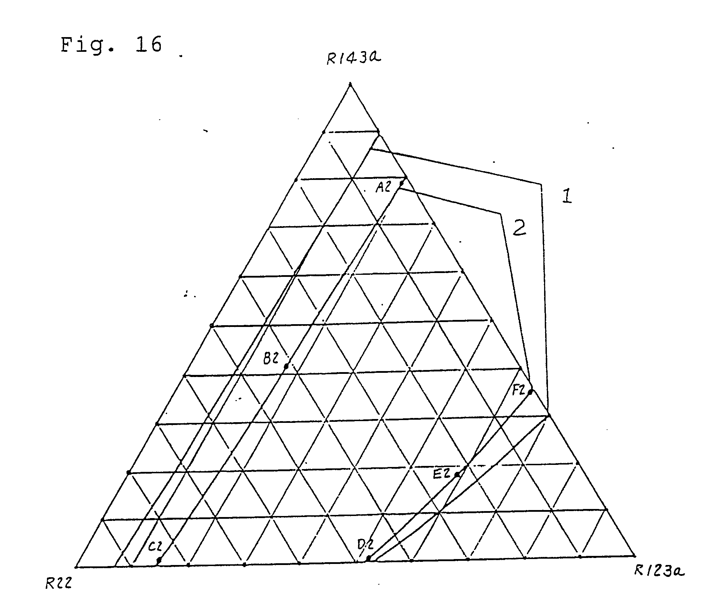

Fig. 16 shows a ternary composition diagram indicating equilibrium states of a mixture consisting of R143a, R22 and 1,2-dichlorotrifluoroethane (R123a) at specific temperatures under specific pressure in a triangular coordinate.

In this case, the mixture comprising about 0 to about 90 % by weight (for example 1 to 90 % by weight) of R143a, about 0 to about 90 % by weight (for example 1 to 90 % by weight) of R22 and about 10 to about 70 % by weight of R123a is preferred, since it has substantially the same vapor pressure as R12 in the temperature range between about 0°C and about 50°C. Further, the mixture comprising about 0 to about 80 % by weight (for example 1 to 80 % by weight) of R143a, about 0 to about 85 % by weight of R22 and about 15 to about 65 % by weight of R123a is more preferred, since it has substantially the same vapor pressure as R12 at all the utilizing temperatures between 0°C and 50°C.

The compositions and ODPs of the working fluids at the points A2 to F2 in Fig. 16 are shown in Table 16.

## Table 16

| Point | A2 | B2 | C2 | D2 | E2 | F2 |
|-------|------|------|------|------|------|------|
| R143a (wt. %) | 78.6 | 41.7 | 1.1 | 0.5 | 18.4 | 34.8 |
| R22 (wt. %) | 1.2 | 40.7 | 84.4 | 47.5 | 22.4 | 0.7 |
| R123a (wt. %) | 20.2 | 17.6 | 14.5 | 52.0 | 59.2 | 64.5 |
| ODP | | 0.005 | 0.024 | 0.045 | 0.034 | 0.023 | 0.013 |

The working fluid having the composition in Table 16 is in the saturated state or the phase equilibrium state under the saturated vapor pressure condition of R12 at 0°C and 50°C, so that, in the utilization temperature range between about 0°C and about 50°C, the working fluid has substantially the same condensation and evaporation temperatures as R12 when operated under the saturated vapor pressure of R12 at said temperatures.

As understood from Figs. 15 and 16, the mixture comprising about 0 to about 90 % by weight (for example 1 to 90 % by weight) of R143a, about 0 to about 90 % by weight (for example 1 to 90 % by weight) of R22 and about 10 to about 70 % by weight of dichlorotrifluoroethane is prefer red, since it has substantially the same vapor pressure as R12 in the temperature range between about 0°C to 50°C. Further, the mixture comprising about 0 to about 80 % by weight (for example 1 to 80 % by weight) of R142a, about 0 to about 85 % by weight (for example 1 to 85 % by weight) of R22 and about 15 to about 65 % by weight of dichlorotrifluoroethane is more preferred, since it has substantially the same vapor pressure at any utilizing temperature in the range between 0°C and 50°C.

Since the working fluids in Examples 15 and 16 are expected to have the ODP of from 0.01 to 0.05, they are very promising as substitute working fluids for R12.

Example 17

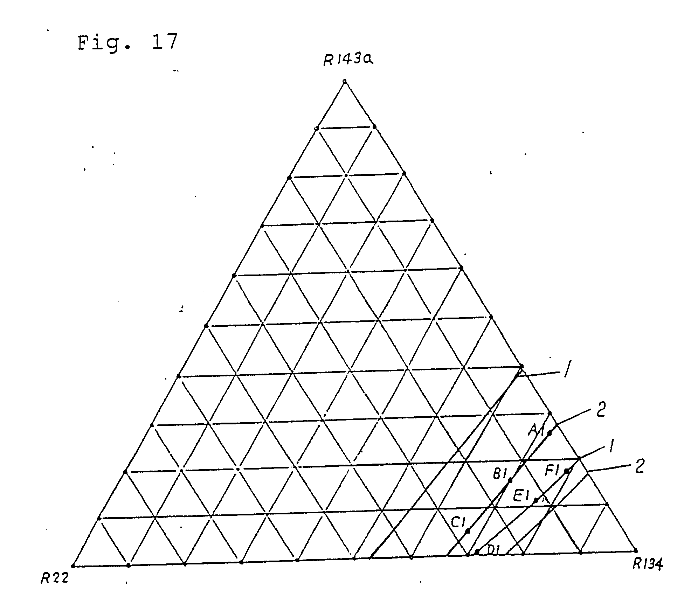

Fig. 17 shows a ternary composition diagram indicating equilibrium states of a mixture consisting of R143a, R22 and 1,1,2,2-tetrafluoroethane (R134) at specific temperatures under specific pressure in a triangular coordinate.

The compositions and ODPs of the working fluids at the points A1 to F1 in Fig. 17 are shown in Table 17.

## Table 17

| Point | A1 | B1 | C1 | D1 | E1 | F1 |
|-------|------|------|------|------|------|------|
| R143a (wt. %) | 26.2 | 16.8 | 5.2 | 0.5 | 11.8 | 17.8 |
| R22 (wt. %) | 1.4 | 12.8 | 26.9 | 28.5 | 11.2 | 2.5 |
| R134 (wt. %) | 72.4 | 70.4 | 67.9 | 71.0 | 77.0 | 79.7 |
| ODP | | 0.001 | 0.006 | 0.013 | 0.014 | 0.006 | 0.001 |

As understood from Fig. 17, the mixture comprising about 0 to about 40 % by weight (for example 1 to 40 % by weight) of R143a, about 0 to about 45 % by weight (for example 1 to 45 % by weight) of R22 and about 55 to about 85 % by weight of R134 is preferred, and further, the mixture comprising about 0 to about 25 % by weight (for example 1 to 25 % by weight) of R143a, about 0 to about 35 % by weight (for example 1 to 35 % by weight) of R22 and about 65 to about 80 % by weight of R134 is more preferred.

Since the working fluids in this Example are expected to have the ODP of from about 0 to 0.02, they are very promising as substitute working fluids for R12.

Example 18

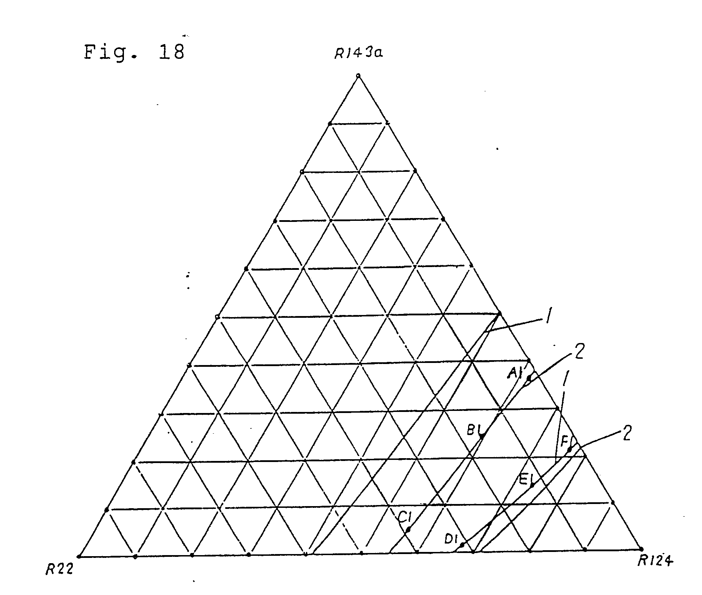

Fig. 18 shows a ternary composition diagram indicating equilibrium states of a mixture consisting of R143a, R22 and 2-chloro-1,1,1,2-tetrafluoroethane (R124) at specific temperatures under specific pressure in a triangular coordinate.

The compositions and ODPs of the working fluids at the points A1 to F1 in Fig. 18 are shown in Table 18.

## Table 18

| Point | A1 | B1 | C1 | D1 | E1 | F1 |
|---|---|---|---|---|---|---|
| R143a (wt. %) | 36.8 | 23.0 | 4.2 | 2.2 | 14.6 | 21.8 |
| R22 (wt. %) | 1.0 | 17.4 | 39.8 | 30.1 | 11.4 | 1.1 |
| R124 (wt. %) | 62.1 | 59.6 | 56.0 | 67.7 | 74.0 | 77.1 |
| ODP | 0.013 | 0.021 | 0.031 | 0.029 | 0.020 | 0.016 |

As understood from Fig. 18, the mixture comprising about 0 to about 50 % by weight (for example 1 to 50 % by weight) of R143a, about 0 to about 60 % by weight (for example 1 to 60 % by weight) of R22 and about 40 to about 80 % by weight of R124 is preferred, and further, the mixture comprising about 0 to about 40 % by weight (for example 1 to 40 % by weight) of R143a, about 0 to about 45 % by weight (for example 1 to 45 % by weight) of R22 and about 55 to about 80 % by weight of R124 is more preferred.

Example 19

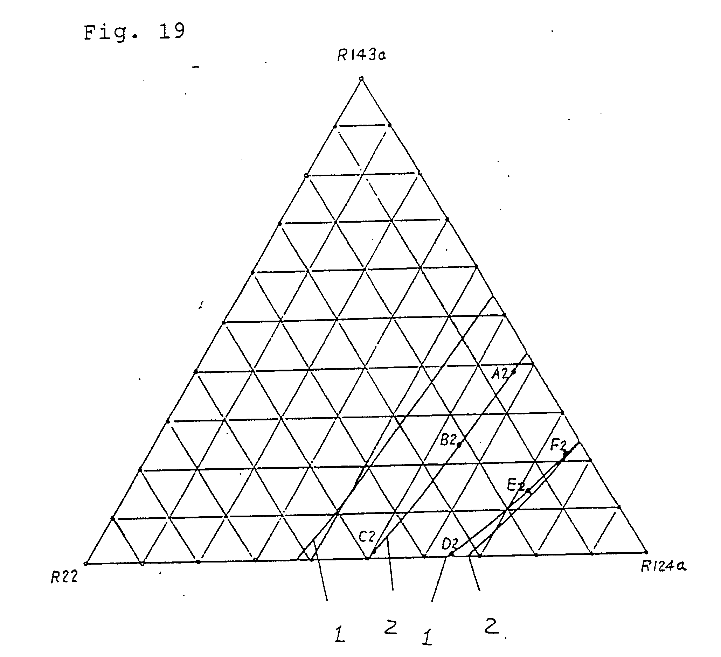

Fig. 19 shows a ternary composition diagram indicating equilibrium states of a mixture consisting of R143a, R22 and 1-chloro-1,1,2,2-tetrafluoroethane (R124a) at specific temperatures under specific pressure in a triangular coordinate.

The compositions and ODPs of the working fluids at the points A2 to F2 in Fig. 19 are shown in Table 19.

## Table 19

| Point | A2 | B2 | C2 | D2 | E2 | F2 |
|---|---|---|---|---|---|---|
| R143a (wt. %) | 38.9 | 23.5 | 0.6 | 0.8 | 14.4 | 21.9 |
| R22 (wt. %) | 3.7 | 21.8 | 48.9 | 34.3 | 13.6 | 2.8 |
| R124a (wt. %) | 57.4 | 54.7 | 50.5 | 64.9 | 72.0 | 75.3 |
| ODP | 0.013 | 0.022 | 0.035 | 0.030 | 0.021 | 0.016 |

In this case, the mixture comprising about 0 to about 55 % by weight (for example 1 to 55 % by weight) of R143a, about 0 to about 60 % by weight (for example 1 to 60 % by weight) of R22 and about 40 to about 75 % by weight of R124a is preferred, and further, the mixture comprising about 0 to about 40 % by weight (for example 1 to 40 % by weight) of R143a, about 0 to about 50 % by weight (for example 1 to 50 % by weight) of R22 and about 50 to about 75 % by weight of R124a is more preferred.

As understood from Figs. 18 and 19, the mixture comprising about 0 to about 55 % by weight (for example 1 to 55 % by weight) of R143a, about 0 to about 60 % by weight (for example 1 to 60 % by weight) of R22 and about 40 to about 80 % by weight of chlorotetrafluoroethane is preferred. Further, the mixture comprising about 0 to about 40 % by weight (for example 1 to 40 % by weight) of R143a, about 0 to about 50 % by weight (for example 1 to 50 % by weight) of R22 and about 15 to about 65 % by weight of chlorotetrafluoroethane is more preferred.

Since the working fluids in Examples 18 and 19 are expected to have the ODP of from 0.01 to 0.04, they are very promising as substitute working fluids for R12.

Example 20

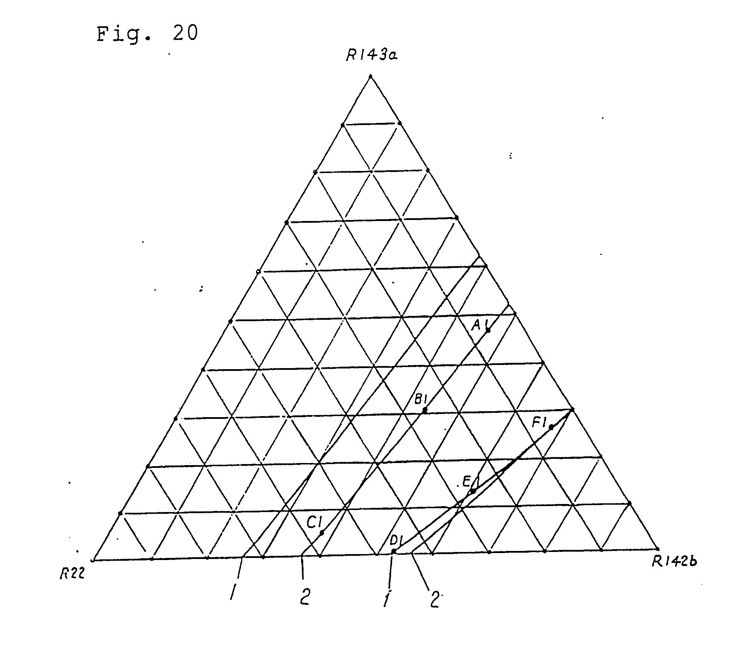

Fig. 20 shows a ternary composition diagram indicating equilibrium states of a mixture consisting of R143a, R22 and 1-chloro-1,1-difluoroethane (R142b) at specific temperatures under specific pressure in a triangular coordinate.

The compositions and ODPs of the working fluids at the points A1 to F1 in Fig. 20 are shown in Table 20.

## Table 20

| Point | A1 | B1 | C1 | D1 | E1 | F1 |
|---|---|---|---|---|---|---|
| R143a (wt. %) | 46.2 | 30.5 | 5.1 | 0.7 | 13.5 | 26.6 |
| R22 (wt. %) | 6.8 | 25.9 | 56.9 | 46.3 | 25.2 | 4.8 |
| R142b (wt. %) | 47.0 | 43.6 | 38.0 | 53.0 | 61.3 | 68.6 |
| ODP | 0.032 | 0.039 | 0.051 | 0.055 | 0.049 | 0.044 |

As understood from Fig. 20, the mixture comprising about 0 to about 60 % by weight (for example 1 to 60 % by weight) of R143a, about 0 to about 75 % by weight (for example 1 to 75 % by weight) of R22 and about 25 to about 70 % by weight of R142b is preferred, and further, the mixture comprising about 0 to about 50 % by weight (for example 1 to 50 % by weight) of R143a, about 0 to about 65 % by weight (for example 1 to 65 % by weight) of R22 and about 35 to about 70 % by weight of R142b is more preferred.

Since the working fluids in this Example are expected to have the ODP of from 0.03 to 0.06, they are very promising as substitute working fluids for R12.

Example 21

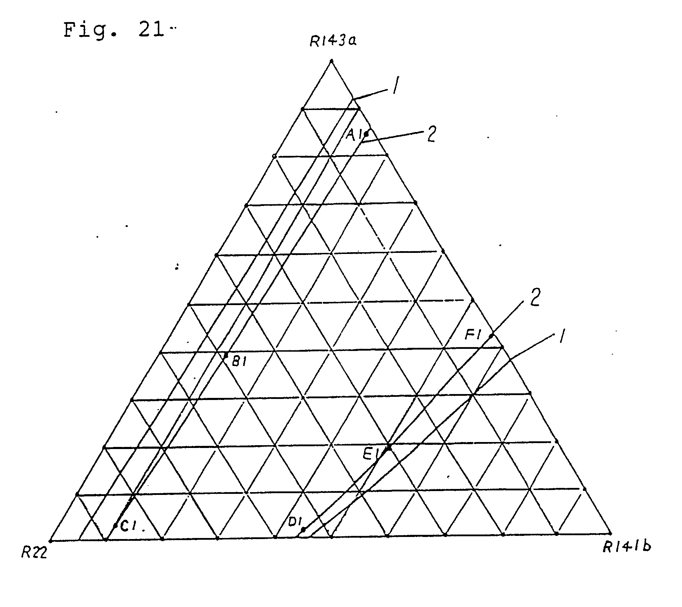

Fig. 21 shows a ternary composition diagram indicating equilibrium states of a mixture consisting of R143a, R22 and 1,1-dichloro-1-fluoroethane (R141b) at specific temperatures under specific pressure in a triangular coordinate.

The compositions and ODPs of the working fluids at the points A1 to F1 in Fig. 21 are shown in Table 21.

Table 21

| Point | A1 | B1 | C1 | D1 | E1 | F1 |
|-------|------|------|------|------|------|------|
| R143a (wt. %) | 84.0 | 38.9 | 2.1 | 1.0 | 19.1 | 42.0 |
| R22 (wt. %) | 1.6 | 49.0 | 87.7 | 54.3 | 30.1 | 0.9 |
| R141b (wt. %) | 14.4 | 12.1 | 10.2 | 44.7 | 50.8 | 57.1 |
| ODP | | 0.015 | 0.037 | 0.054 | 0.072 | 0.066 | 0.058 |

As understood from Fig. 21, the mixture comprising about 0 to about 90 % by weight (for example 1 to 90 % by weight) of R143a, about 0 to about 95 % by weight (for example 1 to 95 % by weight) of R22 and about 5 to about 65 % by weight of R141b is preferred, and further, the mixture comprising about 0 to about 85 % by weight (for example 1 to 85 % by weight) of R143a, about 0 to about 90 % by weight (for example 1 to 90 % by weight) of R22 and about 10 to about 60 % by weight of R141b is more preferred.

Since the working fluids in this Example are expected to have the ODP of from 0.01 to 0.07, they are very promising as substitute working fluids for R12.

From the above results in Examples 15-21, it is understood that the mixture comprising 90 % by weight or less of R143a, 95 % by weight or less of R22, and 55 to 85 % by weight of tetrafluoroethane or 40 to 80 % by weight of chlorotetrafluoroethane or 25 to 70 by weight of chlorodifluoroethane or 10 to 70 % by weight of dichlorotrifluoroethane or 5 to 65 % by weight of dichlorofluoroethane is preferred. Further, the mixture comprising 85 % by weight or less of R143a, 90 % by weight or less of R22, and 65 to 80 % by weight of tetrafluoroethane or 50 to 80 % by weight of chlorotetrafluoroethane or 35 to 70 by weight of chlorodifluoroethane or 15 to 65 % by weight of dichlorotrifluoroethane or 10 to 60 % by weight of dichlorofluoroethane is more preferred.

In the above Examples, the mixtures contain three fluorinated halocarbons, although it is possible to mix four or more fluorinated halocarbons including structural isomers. In such case, preferably, the mixture comprises chlorodifluoromethane as the first component, at least one second component selected from the group consisting of difluoromethane, pentafluoroethane and trifluoroethane, and at least one third component selected from the group consisting of tetrafluoroethane, chlorotetrafluoroethane, chlorodifluoroethane, dichlorotrifluoroethane and dichlorofluoroethane.

Since the working fluid of the present invention is a non-azeotropic mixture and has a temperature gradient in the condensing and evaporating processed, a higher coefficient of performance (COP) than R12 is expected when a Lorenz cycle in which a temperature difference from a heat source fluid is decreased is assembled.

**Claims**

1. A working fluid comprising chlorodifluoromethane, at least one fluorocarbon having a boiling point of -60°C to -40°C under atmospheric pressure selected from the group consisting of methane derivatives and ethane derivatives which consist one or two carbon atom, hydrogen atoms and fluorine atoms and at least one halogenated ethane which consists of two carbon atoms, 1, 2 or 3 hydrogen atoms, 0, 1 or 2 chlorine atoms and balance of fluorine atoms and has a boiling point of not lower than -30°C under atmospheric pressure.

2. The working fluid as claimed in claim 1, which comprises 1 to 95 % by weight of chlorodifluoromethane, 1 to 95 % by weight of said fluorocarbon having a boiling point of -60°C to -40°C and 5 to 95 % by weight of said halogenated ethane.

3. The working fluid as claimed in claim 1, wherein said fluorocarbon is at least one selected from the group consisting of difluoromethane, pentafluoroethane, and trifluoroethane.

4. The working fluid as claimed in claim 1, wherein said halogenated ethane is at least one selected from the group consisting of tetrafluoroethane, chlorotetrafluoroethane, chlorodifluoroethane, dichlorotrifluoroethane and dichlorofluoroethane.

5. The working fluid as claimed in claim 1, which comprises 85 % by weight or less of difluoromethane, 95 % by weight or less of chlorodifluoromethane, and 55 to 95 % by weight of tetrafluoroethane or 40 to 90 % by weight of chlorotetrafluoroethane or 25 to 85 % by weight of chlorodifluoroethane or 10 to 85 % by weight of dichlorotrifluoroethane or 5 to 80 % by weight of dichlorofluoroethane, with the total amount being 100 % by weight.

6. The working fluid as claimed in claim 1, which comprises 75 % by weight or less of difluoromethane, 90 % by weight or less of chlorodifluoromethane, and 70 to 90 % by weight of tetrafluoroethane or 50 to 90 % by weight of chlorotetrafluoroethane or 35 to 85 % by weight of chlorodifluoroethane or 15 to 80 % by weight of dichlorotrifluoroethane or 10 to 75 % by weight of dichlorofluoroethane, with the total amount being 100 % by weight.

7. The working fluid as claimed in claim 1, which comprises 25% by weight or less of difluoromethane, 45 % by weight or less of chlorodifluoromethane and 55 to 95 % by weight of tetrafluoroethane.

8. The working fluid as claimed in claim 7, which comprises 15 % by weight or less of difluoromethane, 30 % by weight or less of chlorodifluoromethane and 70 to 90 % by weight of tetrafluoroethane.

9. The working fluid as claimed in claim 1, which comprises 35 % by weight or less of difluoromethane, 60 % by weight or less of chlorodifluoromethane and 40 to 90 % by weight of chlorotetrafluoroethane.

10. The working fluid as claimed in claim 9, which comprises 25 % by weight or less of difluoromethane, 50 % by weight or less of chlorodifluoromethane and 50 to 90 % by weight of chlorotetrafluoroethane.

11. The working fluid as claimed in claim 1, which comprises 45 % by weight or less of difluoromethane, 75 % by weight or less of chlorodifluoromethane and 25 to 85 % by weight of chlorodifluoroethane.

12. The working fluid as claimed in claim 11, which comprises 35 % by weight or less of difluoromethane, 65 % by weight or less of chlorodifluoromethane and 35 to 85 % by weight of chlorodifluoroethane.

13. The working fluid as claimed in claim 1, which comprises 85 % by weight or less of difluoromethane, 90 % by weight or less of chlorodifluoromethane and 10 to 85 % by weight of dichlorotrifluoroethane.

14. The working fluid as claimed in claim 13, which comprises 70 % by weight or less of difluoromethane, 85 % by weight or less of chlorodifluoromethane and 15 to 80 % by weight of dichlorotrifluoroethane.

15. The working fluid as claimed in claim l, which comprises 85 % by weight or less of difluoromethane, 95 % by weight or less of chlorodifluoromethane and 5 to 80 % by weight of dichlorofluoroethane.

16. The working fluid as claimed in claim 15, which comprises 75 % by weight or less of difluoromethane, 90 % by weight or less of chlorodifluoromethane and 10 to 75 % by weight of dichlorofluoroethane.

17. The working fluid as claimed in claim 1, which comprises 95 % by weight or less of pentafluoroethane, 95 % by weight or less of chlorodifluoromethane, and 55 to 80 % by weight of tetrafluoroethane or 40 to 75 % by weight of chlorotetrafluoroethane or 25 to 65 % by weight of chlorodifluoroethane or 10 to 65 % by weight of dichlorotrifluoroethane or 5 to 60 % by weight of dichlorofluoroethane, with the total amount being 100 % by weight.

18. The working fluid as claimed in claim 1, which comprises 90 % by weight or less of pentafluoroethane, 90 % by weight or less of chlorodifluoromethane, and 65 to 75 % by weight of tetrafluoroethane or 50 to 70 % by weight of chlorotetrafluoroethane or 35 to 65 % by weight of chlorodifluoroethane or 15 to 60 % by weight of dichlorotrifluoroethane or 10 to 50 % by weight of dichlorofluoroethane, with the total amount being 100 % by weight.

19. The working fluid as claimed in claim 1, which comprises 45 % by weight or less of pentafluoroethane, 45 % by weight or less of chlorodifluoromethane and 55 to 80 % by weight of tetrafluoroethane.

20. The working fluid as claimed in claim 19, which comprises 35 % by weight or less of pentafluoroethane, 35 % by weight or less of chlorodifluoromethane and 65 to 75 % by weight of tetrafluoroethane.

21. The working fluid as claimed in claim 1, which comprises 60 % by weight or less of pentafluoroethane, 60 % by weight or less of chlorodifluoromethane and 40 to 75 % by weight of chlorotetrafluoroethane.

22. The working fluid as claimed in claim 21, which comprises 50 % by weight or less of pentafluoroethane, 50 % by weight or less of chlorodifluoromethane and 50 to 75 % by weight of chlorotetrafluoroethane.

23. The working fluid as claimed in claim 1, which comprises 70 % by weight or less of pentafluoroethane, 75 % by weight or less of chlorodifluoromethane and 25 to 65 % by weight of chlorodifluoroethane.

24. The working fluid as claimed in claim 23, which comprises 60 % by weight or less of pentafluoroethane, 65 % by weight or less of chlorodifluoromethane and 35 to 65 % by weight of chlorodifluoroethane.

25. The working fluid as claimed in claim 1, which comprises 90 % by weight or less of pentafluoroethane, 90 % by weight or less of chlorodifluoromethane and 10 to 65 % by weight of dichlorotrifluoroethane.

26. The working fluid as claimed in claim 25, which comprises 85 % by weight or less of pentafluoroethane, 85 % by weight or less of chlorodifluoromethane and 15 to 60 % by weight of dichlorotrifluoroethane.

27. The working fluid as claimed in claim 1, which comprises 95 % by weight or less of pentafluoroethane, 95 % by weight or less of chlorodifluoromethane and 5 to 60 % by weight of dichlorofluoroethane.

28. The working fluid as claimed in claim 27, which comprises 90 % by weight or less of pentafluoroethane, 90 % by weight or less of chlorodifluoromethane and 10 to 50 % by weight of dichlorofluoroethane.

29. The working fluid as claimed in claim 1, which comprises 90 % by weight or less of trifluoroethane, 95 % by weight or less of chlorodifluoromethane, and 55 to 85 % by weight of tetrafluoroethane or 40 to 80 % by weight of chlorotetrafluoroethane or 25 to 70 % by weight of chlorodifluoroethane or 10 to 70 % by weight of dichlorotrifluoroethane or 5 to 65 % by weight of dichlorofluoroethane, with the total amount being 100 % by weight.

30. The working fluid as claimed in claim 1, which comprises 85 % by weight or less of trifluoroethane, 90 % by weight or less of chlorodifluoromethane, and 65 to 80 % by weight of tetrafluoroethane or 50 to 80 % by weight of chlorotetrafluoroethane or 35 to 70 % by weight of chlorodifluoroethane or 15 to 65 % by weight of dichlorotrifluoroethane or 10 to 60 % by weight of dichlorofluoroethane, with the total amount being 100 % by weight.

31. The working fluid as claimed in claim 1, which comprises 40 % by weight or less of trifluoroethane, 45 % by weight or less of chlorodifluoromethane and 55 to 85 % by weight of tetrafluoroethane.

32. The working fluid as claimed in claim 31, which comprises 25 % by weight or less of trifluoroethane, 35 % by weight or less of chlorodifluoromethane and 65 to 80 % by weight of tetrafluoroethane.

33. The working fluid as claimed in claim 1, which comprises 55 % by weight or less of trifluoroethane, 60 % by weight or less of chlorodifluoromethane and 40 to 80 % by weight of chlorotetrafluoroethane.

34. The working fluid as claimed in claim 33, which comprises 40 % by weight or less of trifluoroethane, 50 % by weight or less of chlorodifluoromethane and 50 to 80 % by weight of chlorotetrafluoroethane.

20

35. The working fluid as claimed in claim 1, which comprises 60 % by weight or less of trifluoroethane, 75 % by weight or less of chlorodifluoromethane and 25 to 70 % by weight of chlorodifluoroethane.

36. The working fluid as claimed in claim 35, which comprises 50 % by weight or less of trifluoroethane, 65 % by weight or less of chlorodifluoromethane and 35 to 70 % by weight of chlorodifluoroethane.

37. The working fluid as claimed in claim 1, which comprises 90 % by weight or less of trifluoroethane, 90 % by weight or less of chlorodifluoromethane and 10 to 70 % by weight of dichlorotrifluoroethane.

38. The working fluid as claimed in claim 37, which comprises 80 % by weight or less of trifluoroethane, 85 % by weight or less of chlorodifluoromethane and 15 to 65 % by weight of dichlorotrifluoroethane.

39. The working fluid as claimed in claim 1, which comprises 90 % by weight or less of trifluoroethane, 95 % by weight or less of chlorodifluoromethane and 5 to 65 % by weight of dichlorofluoroethane.

40. The working fluid as claimed in claim 39, which comprises 85 % by weight or less of trifluoroethane, 90 % by weight or less of chlorodifluoromethane and 10 to 60 % by weight of dichlorofluoroethane.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

R143a

A2

B2

F2

E2

C2

D2

R22

R124a

1   2   1   2.

Fig. 20

Fig. 21

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | JAPANESE PATENT OFFICE, FILE SUPPLIER JAPS, Tokyo, JP;<br>& JP-A-1 092 286 (KAMIMURA TORU)<br>* Whole abstract * | 1-4 | C 09 K 5/04 |
| Y | GB-A-1 137 378 (UNION CARBIDE)<br>* Page 1, lines 17-29,59-89; claims * | 1-4 | |
| A | EP-A-0 315 069 (DAIKIN IND. LTD)<br>* Page 2, lines 1-40; claims * | 1-7,31-40 | |
| A | EP-A-0 105 831 (DAIKIN KOGYO LTD)<br>* Page 2, lines 20-26; page 3, lines 1-20; claims * | 1-7 | |
| D,A | EP-A-0 299 614 (DU PONT DE NEMOURS AND CO.)<br>* Page 2, lines 30-53; examples 1,2; claims * | 1-7 | |

**TECHNICAL FIELDS SEARCHED (Int. Cl.5)**

C 09 K

The present search report has been drawn up for all claims

| Place of search | Date of completion of search | Examiner |
|---|---|---|
| The Hague | 20 February 91 | LEDER M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document